# EUROPÄISCHE PATENTSCHRIFT

(11) **EP 0 777 594 B1**
(45) Veröffentlichungstag und Bekanntmachung des Hinweises auf die Patenterteilung: **10.01.2001**
(21) Anmeldenummer: 96915985.4
(22) Anmeldetag: 11.06.1996
(51) Int. Cl.: B60S 1/38

(54) **WISCHBLATT ZUM REINIGEN VON SCHEIBEN AN KRAFTFAHRZEUGEN**
VEHICLE WINDSCREEN WIPER
RACLETTE D'ESSUIE-GLACE DESTINEE AU NETTOYAGE DES VITRES DE VEHICULES AUTOMOBILES

(30) Priorität: 20.06.1995 DE 19522273
(43) Veröffentlichungstag der Anmeldung: 11.06.1997
(73) Patentinhaber: ROBERT BOSCH GMBH, 70442 Stuttgart (DE); DaimlerChrysler AG, 70567 Stuttgart (DE)
(72) Erfinder: ULLRICH, Jürgen, D-71701 Schwieberdingen (DE); MERKEL, Wilfried, D-77876 Kappelrodeck (DE); KUEHBAUCH, Gerd, D-77830 Bühlertal (DE); LORENZ, Karlheinz, D-76534 Baden-Baden (DE); BERGER, Josef, D-72649 Wolfschlugen (DE); SCHULZE, Michael, D-71154 Nufringen (DE); WEGNER, Norbert, D-77815 Bühl (DE); MAYER, Jürgen, D-76571 Gaggenau (DE)
(74) Vertreter: Wierspecker, Horst
(86) Internationale Anmeldenummer: DE9601012
(87) Internationale Veröffentlichungsnummer: WO9700796

(56) Entgegenhaltungen:
- DE-A- 4 320 637
- DE-A- 4 325 601
- GB-A- 2 066 655

## Beschreibung

### Stand der Technik

Bei den handelsüblichen Scheibenwischblättern mit einem Traggestell für die Wischleiste unterliegt diese einem unvermeidbaren Verschleiß, der die Reinigungsqualität mindert, so daß das Wischblatt von Zeit zu Zeit ersetzt werden muß. Da aber das Tragbügelgestell des Wischblatts dann in aller Regel noch voll funktionsfähig ist, wird dem Endverbraucher aus Kostengründen ein sogenannter Nachfüllsatz angeboten, welcher eine Wischleiste, zwei in einander gegenüberliegenden Längsnuten der Wischleiste unterzubringende Federschienen und eine Sicherungsklammer umfaßt. Dieser Nachfüllsatz kann nach Entfernen der entsprechenden ursprünglichen Bauteile in die Haltekrallen der Gestellteile eingeschoben werden, wobei die Sicherungsklammer einmal die Federschienen in der Wischleiste sichert und weiter mit elastisch auslenkbaren Federarmen und daran angeordneten Haken die Wischleiste samt Federschienen an dem Tragbügelgestell verankert. Eine derartige Lösung ist aus der DE-B-14 30 338 bekannt.

Bei dem erfindungsgemäßen Wischblatt ist jedoch - anstelle der beiden außenliegenden Federschienen - nur eine einzige Federschiene in einem rundum geschlossenen, in der Kopfleiste der Wischleiste angeordneten Längskanal untergebracht, wie es aus der DE-A-43 20 637 bekannt ist. Zur Sicherung gegen Längsverschiebung der Federschiene hat man bei einem anderen bekannten Wischblatt (FR-A- 2 267 909) der gattungsgemäßen Art die Federschiene kürzer als die Wischleiste ausgeführt und an beiden Enden mit einer schwalbenschwanzförmigen Aussparung versehen, in welche in diese passende, lappenartige Ansätze von Endschilden eingesetzt werden, die den Querschnitt der Kopfleiste partiell überragen und somit dafür sorgen, daß die in die Krallen des Tragbügelgestells eingeschobene Wischleiste während des Wischbetriebs nicht in Längsrichtung aus den Krallen herauswandern kann. Weiter sorgen die überstehenden Bereiche der Endschilde dafür, daß die Wischleiste am Tragbügelgestell gesichert ist. Dem Endverbraucher werden also vier Einzelteile an die Hand gegeben, die er dann selbst montieren muß. Besonders schwierig ist dabei die Montage des zweiten Endschilds, weil dessen Ansatz erst dann in die Aussparung der Federschiene eingefügt werden kann, wenn deren betreffendes Ende - nach Zurückdrücken der längeren, elastischen Wischleiste - freiliegt.

### Vorteile der Erfindung

Bei dem erfindungsgemäßen Wischblatt nach Abspruch 1, das dem Wischblatt gemäß der DE-A-4 320 637 gattungsgleich ausgebildet ist, muß der vormontierte Nachfüllsatz - nach Entfernen der kompletten alten Wischleiste - lediglich in das vorhandene Traggestell eingeschoben und mit Hilfe seiner Sicherungsmittel am Gestell verankert werden. Dies wird einmal durch die formschlüssige Verbindung zwischen Federschiene und Wischleiste und weiter durch die feste Anordnung der Sicherungsmittel an der Wischleiste ermöglicht, so daß der Nachfüllsatz dem Endverbraucher als ein einziges, fertig montiertes Bauteil zur Verfügung gestellt wird.

Eine einfache Arretierung gegen eine Längsverschiebung der Federschiene in dem Längskanal ergibt sich, wenn die Federschiene an wenigstens einer Längsseite eine Ausnehmung hat, in welche die dieser benachbarte Kanalwand hineinragt.

In Weiterbildung der Erfindung wird vorgeschlagen, daß quer zur Längserstreckung der Wischleiste wirkende Spannmittel die Kanalwand in die Ausnehmung drücken. Dadurch wird die Montage der Federschiene erleichtert, weil diese vor der Anbringung der Spannmittel vorgenommen wird.

Eine kostengünstige Art der Spannmittel wird erreicht, wenn diese durch eine Klammer gebildet sind, welche die Kopfleiste der Wischleiste umgreift und deren zueinander im wesentlichen parallel verlaufende Schenkel die einander gegenüberliegenden seitlichen Kanalwände zusammendrücken.

Eine solche Klammer kann gleichzeitig auch zur Befestigung der Sicherungsmittel an der Wischleiste dienen, wenn zwischen einem die Klammerschenkel verbindenden Quersteg der Klammer, und der diesem zugewandten oberen Fläche der Kopfleiste die Federklammer angeordnet und festgehalten ist und mit zumindest einem elastisch auslenkbaren Arm eine Haltekralle des Traggestells quert und mit einem an dem Arm vorhandenen Haken hintergreift.

Zur vorschriftsmäßigen Führung der Federklammer an der Wischleiste sind an einem plattenförmigen, an der oberen Fläche der Kopfleiste aufliegenden Körper der Federklammer die beiden Seitenwände der Kopfleiste übergreifende Ansätze angeordnet, welche mit gegeneinander gerichteten Enden in randoffene Längsnuten der Wischleiste greifen.

Zur Festlegung der Federklammer an der Wischleiste hat der plattenförmige Körper einander gegenüberliegende Aussparungen, in welchen die Schenkel der Spannklammer die Federklammer queren.

Zur Sicherung des die Wischleiste, die Federschiene, die Spannklammer und die Sicherungsklammer umfassenden Nachfüllsatzes an dem Traggestell ist der elastisch auslenkbare Arm der Federklammer durch eine der einen Seitenwand der Kopfleiste benachbarte, sich in Längsrichtung der Wischleiste erstreckende Wange des plattenförmigen Körpers gebildet, an deren freien Ende der mit der Haltekralle des Traggestells zusammenwirkende Haken angeordnet ist.

Dabei befindet sich zweckmäßigerweise die Wange in einer Ebene, in welcher der eine Ansatz des Körpers liegt.

Eine besonders kostengünstig herzustellende Federklammer ergibt sich, wenn diese mit ihren Ansätzen und dem den Haken aufweisenden Arm einstückig ausgebildet und aus Federbandstahl hergestellt ist.

Auch ist es zur besonderen betriebssicheren Anordnung des Nachfüllsatzes am Traggestell denkbar, daß die Federklammer zwei sich parallel zueinander erstreckende, den beiden Seitenwänden der Kopfleiste benachbarte Wangen hat, welche zwei Hakenarme bilden.

Wenn die Klammer aus einem verformbaren Metall hergestellt wird, ist sie besonders gut geeignet die Kopfleiste im Bereich der Aussparung in der Federschiene zu verformen.

Eine besonders einfache, weil wenige Bauteile aufweisende Lösung ergibt sich, wenn mit der Spannklammer eine Federklammer zu einem Kombiteil einstückig verbunden ist und die Federklammer mit zumindest einem elastisch auslenkbaren Arm eine Haltekralle des Traggestells quert und diese mit einem am Arm vorhandenen Haken hintergreift.

Wenn das Kombiteil ein plattenförmiges Basisteil hat, an dem die Arme der Federklammer angeordnet sind und in Montagerichtung des Kombiteils gesehen dieses vor den Armen eine Führungsklammer aufweist und zwischen der Führungsklammer und den Armen an dem Kombiteil eine Spannklammer angeordnet ist, welche die Kopfleiste der Wischleiste zumindest abschnittsweise umgreift und wenn weiter deren zueinander im wesentlichen parallel verlaufende Schenkel die einander gegenüberliegenden seitlichen Kanalwände in die Ausnehmung der Federschiene drücken, wird eine kompakte Anordnung erhalten, die kostengünstig montierbar ist.

In weiterer Ausgestaltung der Erfindung ist an den die Kopfleiste der Wischleiste seitlich umfassenden Schenkel der Spannklammer je ein sich in Montagerichtung erstreckender Lappen angeordnet die bei montiertem Nachfüllsatz von den Haltekrallen des Traggestells übergriffen sind. Dadurch ist ohne besonderen Herstellungs- und Montageaufwand eine Sicherung gegen Auffedern der Spannklammer erreicht, weil die Lappen von den Krallen in ihrer vorschriftsmäßigen Montagestellung festgehalten sind.

Zum Spielausgleich zwischen Nachfüllsatz und Tragbügelgestell ist der Lappen aus der Ebene der Schenkel heraus nach außen gekrümmt, wobei das freie Ende des Lappens eine nach innen gerichtete Lauffläche bildet, welche das Einführen des Nachfüllsatzes in das Tragbügelgestell erleichtert.

Zur Sicherung des Nachfüllsatzes am Tragbügelgestell hat das plattenförmige Basisteil des Kombiteils im Bereich der Schenkel der Spannklammer zumindest eine Auswölbung, deren Endkante dem Haken zugewandt ist, wobei der Abstand zwischen der Endkante und der Hakenschulterkante auf die Länge der Haltekralle des Traggestells abgestimmt ist. Dadurch kommt die Haltekralle des Tragbügelgestells zwischen die einander zugewandten Kanten der Auswölbung und der Hakenschulter zu liegen, so daß ein unbeabsichtigtes Lösen des Nachfüllsatzes vom Tragbügelgestell ausgeschlossen ist.

Weitere vorteilhafte Ausgestaltungen der Erfindung sind der nachfolgenden Beschreibung und der zeichnerischen Darstellung der Ausführungsbeispiele der Erfindung zu entnehmen.

### Zeichnung

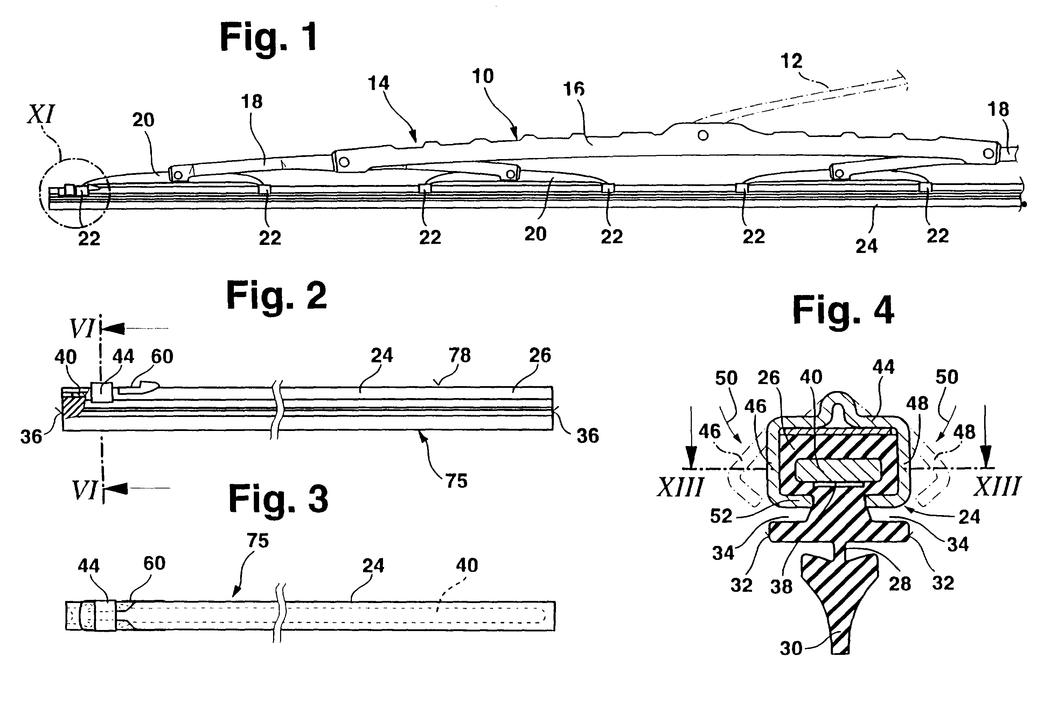

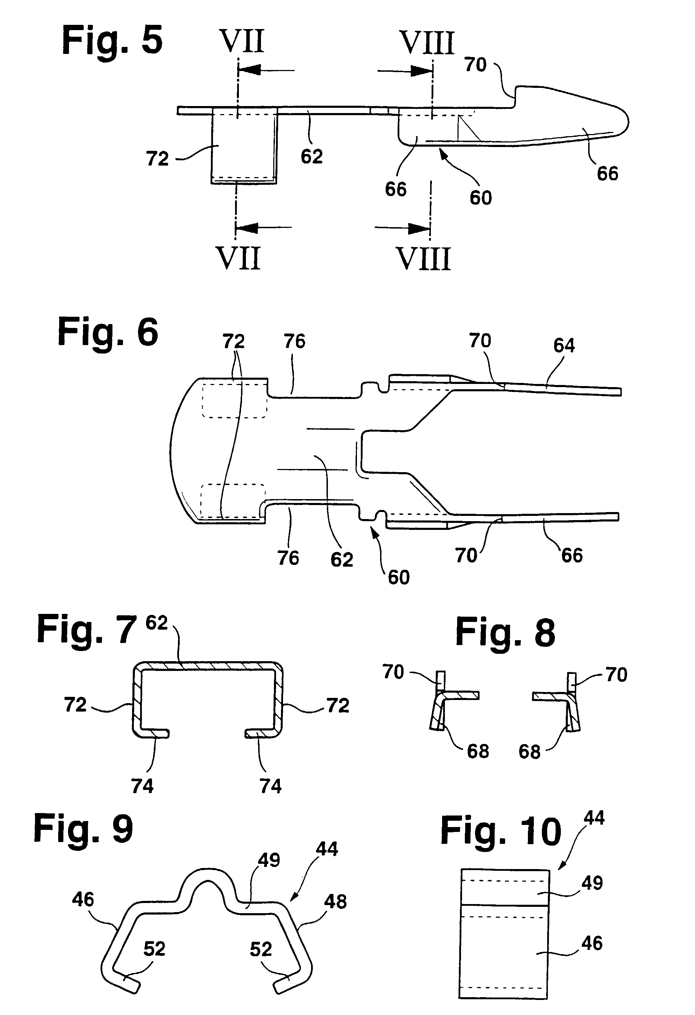

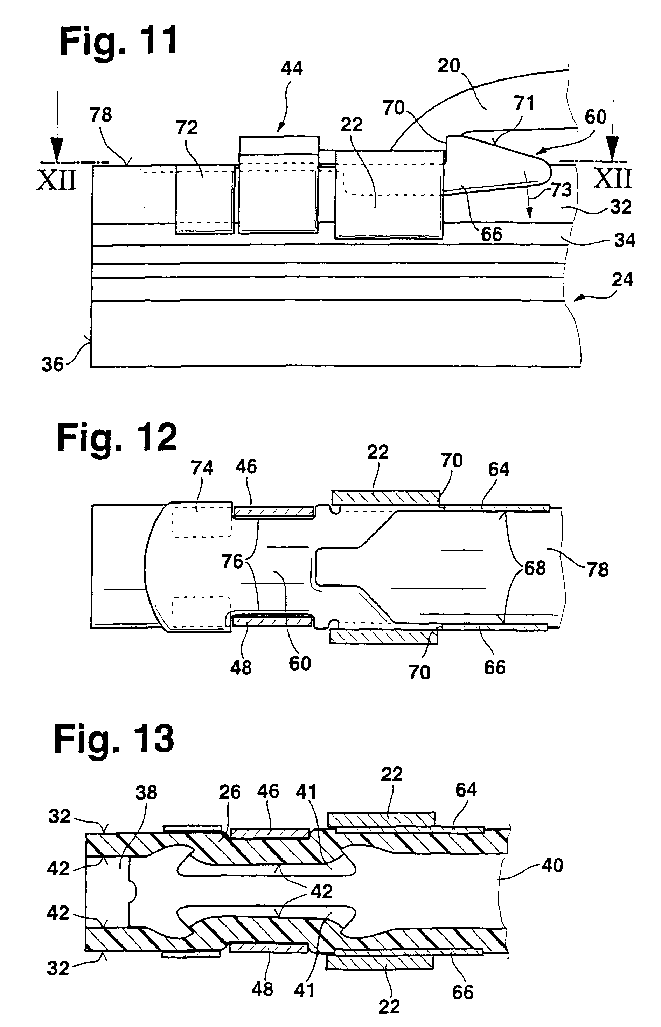

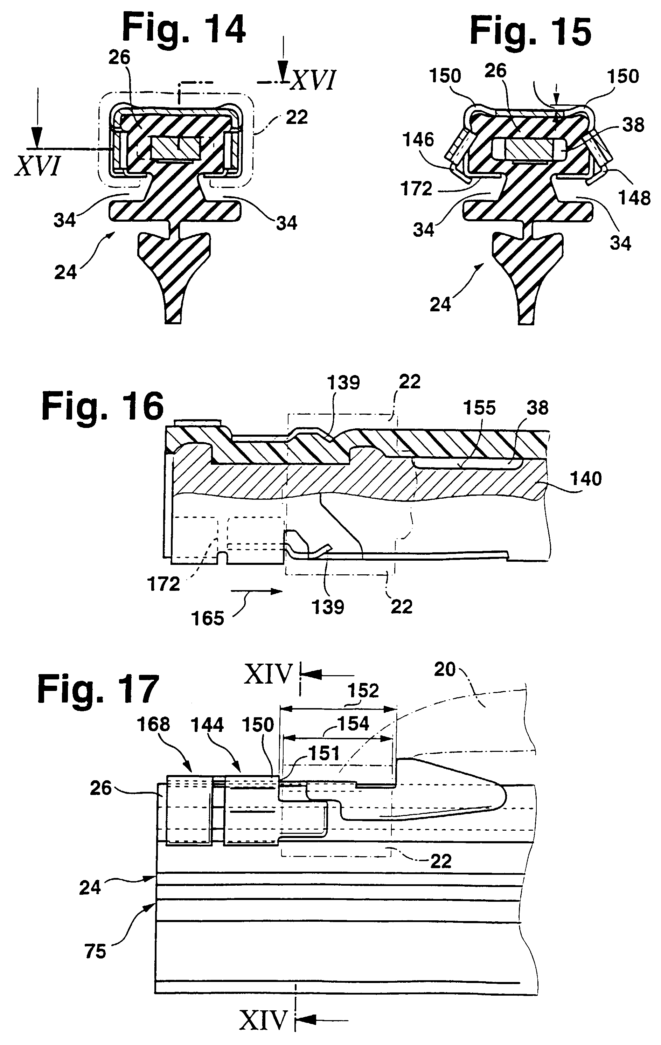

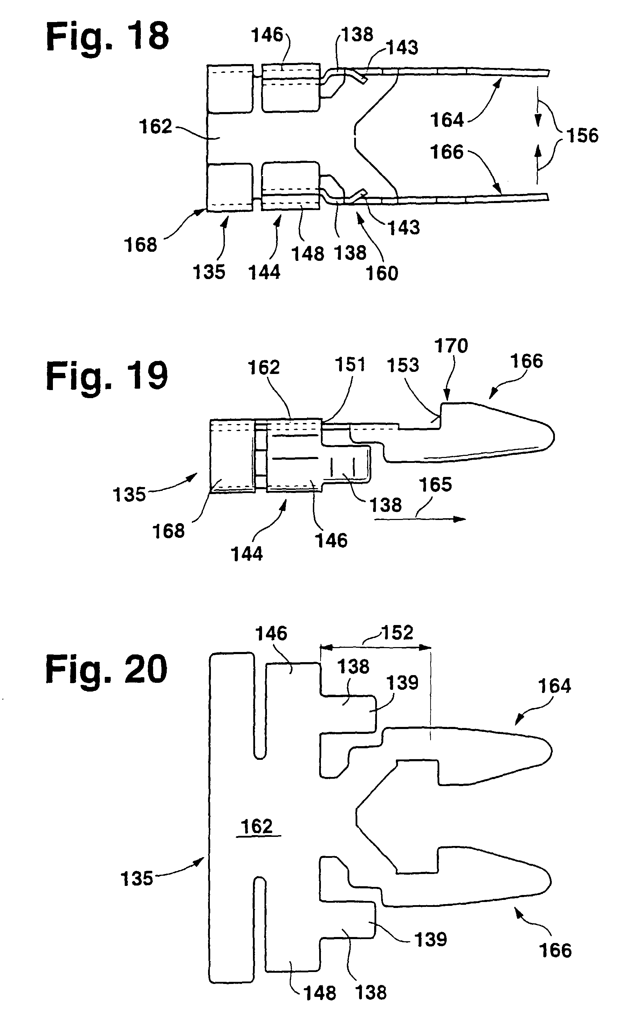

In der Zeichnung zeigen Figur 1 eine Teilansicht eines erfindungsgemäß ausgebildeten Wischblatts, Figur 2 eine Seitenansicht eines zum Wischblatt gehörenden Nachfüllsatzes, in vergrößerter Darstellung, Figur 3 eine Draufsicht auf den Nachfüllsatz gemäß Figur 2, Figur 4 einen Schnitt entlang der Linie IV-IV in Figur 2 durch den Nachfüllsatz, in vergrößerter Darstellung, Figur 5 eine Seitenansicht einer zum Nachfüllsatz gemäß Figur 2 gehörenden Sicherungsfeder in vergrößerter Darstellung, Figur 6 eine Draufsicht auf die Sicherungsfeder gemäß Figur 5, Figur 7 einen Schnitt durch Sicherungsfeder entlang der Linie VII-VII in Figur 5, Figur 8 einen Schnitt durch die Sicherungsfeder entlang der Linie VIII-VIII in Figur 5, Figur 9 einen Draufsicht auf eine zum Nachfüllsatz gemäß Figur 2 gehörenden Spannklammer in vergrößerter Darstellung, Figur 10 eine Seitenansicht der Spannklammer gemäß Figur 9, Figur 11 eine vergrößerte Darstellung einer in Figur 1 mit XI bezeichneten Einzelheit, Figur 12 einen Schnitt entlang der Linie XII-XII in Figur 11, Figur 13 einen Schnitt entlang der Linie XIII-XIII in Figur 4, Figur 14 einen Schnitt gemäß Figur 4 durch eine andere, betriebsbereit montierte Ausführungsform der Erfindung, Figur 15 die Anordnung gemäß Figur 14, bei der die mit der Federklammer einstückig ausgeführte Spannklammer in einer Vormontagestellung noch geöffnet ist, Figur 16 eine Draufsicht auf das eine Ende des Wischblatts gemäß der anderen Ausführungsform, teilweise entlang der Linie XVI-XIV in Figur 17 halbseitig im Schnitt dargestellt, Figur 17 eine Seitenansicht des einen Endes des Wischblatts gemäß der anderen Ausführungsform, Figur 18 eine Draufsicht von unten auf ein die Federklammer und die Spannklammer aufweisendes Kombiteil, Figur 19 eine Seitenansicht des Kombiteils und Figur 20 die Ausgangsplatine, aus der das aus Metall gefertigte Kombiteil gebogen wird.

### Beschreibung des Ausführungsbeispiels

Ein in Figur 1 teilweise in Ansicht dargestelltes Wischblatt 10 gehört zu einer nicht näher dargestellten Wischvorrichtung eines Kraftfahrzeuges. Das Wischblatt 10 wird mittels eines angetriebenen, in Figur 1 strichpunktiert dargestellten Wischerarms 12 über eine zu wischende Scheibe des Kraftfahrzeuges bewegt. Das Wischblatt 10 umfaßt beim Ausführungsbeispiel ein mehrgliedriges Traggestell 14, das als Tragbügelsystem aufgebaut ist. Das heißt, daß an den Enden eines mit dem Wischerarm gelenkig verbundenen Hauptbügels 16 Zwischenbügel 18 angelenkt sind, mit deren Enden Krallenbügel 20 gelenkig verbunden sind, die an ihren Enden Krallen 22 zum Fassen einer aus einem elastischen gummiähnlichen Material bestehenden Wischleiste 24 dienen. Sowohl die Wischleiste als auch das Traggestell 14 sind langgestreckt ausgebildet (Figur 1).

Wie Figur 4 zeigt, hat die Wischleiste 24 eine Kopfleiste 26, die über einen Kippsteg 28 mit einer auf der zu wischenden Scheibe aufliegenden Wischlippe 30 verbunden ist. An den beiden Längs-Seitenflächen 32 der Kopfleiste 26 sind einander gegenüberliegend Längsnuten 34 angeordnet, in welche in bekannter Weise die Haltekrallen 22 der Krallenbügel 20 greifen. Da die Längsnuten 34 an den beiden Endflächen 36 der Wischleiste 24 münden, kann diese ohne Schwierigkeiten in ihrer Längsrichtung in die Haltekrallen 22 der Krallenbügel 20 eingeschoben werden. Um eine ordnungsgemäße Verteilung des Auflagedruckes des Wischblatts bzw. der Wischleiste 24 auf der zu wischenden Scheibe zu erreichen, ist in der Kopfleiste 26 ein an den beiden Endflächen 36 der Wischleiste 24 mündender, rundum geschlossener Längskanal 38 (Figur 13) angeordnet, in dem eine langgestreckte Federschiene 40 untergebracht ist (Figuren 4 und 13). Die Kanalwände 42 ragen also formschlüssig in die Ausnehmungen 41 der Federschiene 40. Zur Sicherung der Federschiene 40 in dem Längskanal 38 der Kopfleiste 26 ist die Federschiene 40 an ihrem einen Endbereich mit zwei einander gegenüberliegenden, seitlichen, randoffenen Ausnehmungen 41 versehen, in welche jeweils Teilabschnitte der einander gegenüberliegenden Kanalwände 42 mit Hilfe einer Spannklammer 44 gedrückt werden (Figuren 4 und 13). Die Spannklammer 44 selbst ist in den Figuren 9 und 10 als Einzelteil dargestellt. Sie wird nach Einbringen der Federschiene 40 in den Längskanal 38 in Längsrichtung auf die Kopfleiste 26 der Wischleiste 24 aufgeschoben, bis ihre in Figur 4 strichpunktiert dargestellten Schenkel 46 und 48 über den Ausnehmungen 41 der Federschiene 40 liegen. Danach werden ihre Arme in Richtung der Pfeile 50 in Figur 4 nach innen gedrückt, so daß sie mit an ihren freien Enden angeordneten Haken 52 in die Längsnuten 34 der Kopfleiste 26 greifen (Figur 4). Dabei ist die Klammer 44 in ihren Abmessungen so auf die Kopfleiste 26 abgestimmt, daß sie nach Beendigung der Verformung (Pfeile 50) mit ihren Schenkeln 46 und 48 die Kanalwände 42 in die Ausnehmungen 41 der Federschiene 40 drückt, so daß eine absolute, formschlüssige Sicherung der Federschiene 40 im Längskanal 38 gegen Längsverschiebung gewährleistet ist. Die Klammer 44 drückt also die Kanalwände 42 quer zur Längserstreckung der Wischleiste 24 aufeinander zu und in die Ausnehmungen 41 hinein, so daß sie zusammen mit diesen Ausnehmungen 41 Haltemittel zum Sichern der Federschiene 40 an der Wischleiste 24 darstellt.

Um nun auch die Wischleiste 24 gegen eine unerwünscht große Längsverschiebung gegenüber dem Traggestell 14 zu sichern, ist an der Wischleiste 24 eine als Sicherungsmittel dienende, aus einem Federbundstahl gefertigte Federklammer 60 angeordnet (Figur 11). Die Federklammer 60 ist in den Figuren 5 bis 8 dargestellt. Sie weist ein plattenförmiges Basisteil 62 auf, von dem aus sich, parallel und mit Abstand zueinander Arme 64 und 66 erstrecken. Diese Arme 64 und 66 sind gegenüber dem Basisteil 62 um etwa 90° abgekantet, so daß sich seitliche Wangen 68 ergeben, die an ihren freien Enden mit einem Haken 70 versehen sind, welche über die Ebene hinausragen, in welcher sich der plattenförmige Körper 62 der Federklammer 60 befindet. Weiter sind an das plattenförmige Basisteil 62 der Federklammer 60 Ansätze 72 angeformt, welche sich im wesentlichen in der gleichen Ebene befindet, in welcher auch die Wangen 64 und 66 der Federklammer 60 liegen. Die Enden 74 der Ansätze 72 sind gegeneinander gerichtet und so bemessen, daß sie bei montierter Federklammer 60 ebenfalls in die Längsnuten 34 der Kopfleiste 32 greifen. In einen Mittelabschnitt zwischen den beiden einander gegenüberliegenden Ansätzen 72 und den beiden einander gegenüberliegenden Federarmen 64 und 66 der Federklammer 60 ist deren plattenförmiges Basisteil 62 mit zwei einander gegenüberliegenden Aussparungen 76 versehen, deren Abmessungen auf die Klammerschenkel 46 und 48 der Spannklammer 44 abgestimmt sind.

Insbesondere die Figuren 11 und 12 zeigen, daß die Federklammer 60 mit ihrem plattenförmigen Basisteil 62 auf der oberen Fläche 78 der Kopfleiste 26 der Wischleiste 24 aufliegt. Dabei umgreifen die Ansätze 72 mit ihren gegeneinander gerichteten Enden 74 einen Teil der Kopfleiste 26 und greifen die Längsnuten 34 der mit der Federschiene 40 versehenen Wischleiste 24 ein. Danach wird die Spannklammer 44 in ihre vorschriftsmäßige Position gebracht und die Klammerschenkel 46 und 48 in Richtung der Pfeile 50 (Figur 4) so zusammengedrückt, daß sie ihre in den Figuren 4, 11, 12 und 13 dargestellte Position gelangen. Dadurch wird die schon beschriebene Längsverschiebesicherung der Federschiene 40 in dem Längskanal 38 der Kopfleiste 26 erreicht und darüber hinaus gleichzeitig eine Längsverschiebesicherung für die Federklammer 60 gegenüber der Wischleiste 24 erhalten, weil die Klammerschenkel 46 und 48 in die Aussparungen 76 im plattenförmigen Körper 62 der Federkammer 60 gelangen und diesen queren. Dabei liegt nun das Basisteil 62 der Federklammer 60 zwischen einem die Klammerschenkel 46, 48 verbindenden Quersteg 49 der Spannklammer 44 und der diesem zugewandten oberen Fläche 78 der Kopfleiste 26. Diese Vormontage wird vorgenommen, solange die Wischleiste 24 noch nicht am Traggestell 14 angeordnet ist. Nach Beendigung der eben beschriebenen Vormontage ergibt sich ein Montagesatz, zu dem die Wischleiste 24, die Federschiene 40, die Federklammer 60 und die Spannklammer 44 gehören (Figuren 2 und 3). Es ergibt sich somit ein Montage- oder Nachfüllsatz, der auf einfache Weise mit dem Traggestell 14 verbunden werden kann. Dazu wird das von der Federklammer 60 abgewandte Ende 36 der Wischleiste 24 in der schon beschriebenen Weise in das Traggestell 14 eingeschoben, wobei die Haltekrallen 22 einen Teil der Kopfleiste 26 umgreifen und in die Längsnuten 34 eintauchen. Wenn nun die freien Enden der Federarme 64 und 66 gegen die Haltekrallen 22 stoßen, werden diese, unter der Wirkung einer vor den Haken 70 befindlichen Anlaufschräge 71 (Figur 11), elastisch in Richtung des Pfeiles 73 (Figur 11) ausgelenkt, so daß sie an den Längsseitenflächen 32 der Kopfleiste 26 anliegend die Haltekrallen 22 - infolge des dort vorhandenen Montagespiels - queren und ihrer in Figur 11 dargestellten Position wieder entgegen der Richtung des Pfeiles 73 zurückfedern und den Montage- oder Nachfüllsatz 75 (Figuren 2 und 3) am Traggestell 14 verankern.

Die Spannklammer 44 bildet somit ein Mittel um die Federschiene 40 formschlüssig in dem Längskanal 38 der Wischleiste 24 zu halten. Weiter sorgt die Spannklammer 44 für eine sichere Verbindung der als Sicherungsmittel dienenden Federklammer 60 an der Wischleiste 24. Um eine dauerhafte Wirkung der Spannklammer 44 zu erreichen, ist diese vorzugsweise aus einem verformbaren Metall hergestellt.

Es ist gegebenenfalls zweckmäßig, die Spannklammer und die Federklammer als ein einziges Bauelement auszuführen. Die Figuren 14 bis 20 zeigen eine solche Ausführungsform mit einem Kombiteil 135, das eine Spannklammer 144, eine Federklammer 160 und eine Führungsklammer 168 aufweist. Das für das Kombiteil 135 zu verwendende Material muß einerseits genügend steif sein, damit die Klemmfunktion für die Kanalwand erfüllt wird andererseits muß seine Elastizität aber auch die elastische Auslenkung der Federarme 164, 166 mit den Haken ermöglichen.

Die besondere Ausgestaltung des Kombiteils 135 sei zunächst anhand der Figuren 18 bis 20 erläutert, in denen dieses als Einzelteil so dargestellt ist, als sei es schon mit der Wischleiste 24 montagegerecht verbunden. Das Kombiteil 135 hat ein plattenförmiges Basisteil 162, das Teil einer Führungsklammer 168 einer Spannklammer 144 und einer Feder- oder Sicherungsklammer 160 ist. Alle diese Klammern 168, 144, 160 haben einen wenigstens annähernd U-förmigen Querschnitt, wobei der die jeweiligen U-Schenkel 146, 148 bzw. Ansätze 172 bzw. Wangen 164, 166 verbindende Steg durch das gemeinsame Basisteil 162 gebildet ist. Die Anordnung der Spannklammer 144 am Kombiteil 135 ist so getroffen, daß ihre Schenkel 146, 148 bei montiertem Wischblatt 10 den Aussparungen 141 der Federschiene 140 gegenüberliegen. In Montagerichtung (Pfeil 165 in den Figuren 16 und 19) gesehen, weist das Kombiteil 135 vor den Armen 164, 166 der Federklammer 160 die Führungsklammer 168 auf, welche für eine ordnungsgemäße Führung des Kombiteils 135 auf der Kopfleiste 26 sorgt. Zwischen den Armen 164, 166 der Federklammer 160 und der Führungsklammer 168 ist an dem Kombiteil 135 die Spannklammer 144 ausgebildet, deren Schenkel 146, 148 die Funktion der Schenkel 46, 48 der Spannklammer 44 der schon erläuterten Ausführungsform (Figuren 4 bis 13) übernehmen. Dies trifft selbstverständlich auch auf die Beziehungen zwischen der Führungsklammer 168 und den dieser entsprechenden Anordnung der Teile 72 und 62 (Figur 7) sowie für die allgemeine Ausbildung und Funktion der Feder- oder Sicherungsklammer 160 im Hinblick auf die entsprechenden Teile 62, 64 (Figuren 5 und 6) zu. Abweichend davon sind an die Schenkel 146, 148 der Spannklammer 144 sich in Richtung des Pfeils 165 erstreckende Lappen 138 angeformt, die bei montiertem Nachfüllsatz 75 von den in den Figuren 16 und 17 strichpunktiert angedeuteten Haltekrallen 22 des Traggestells übergriffen sind. Wie Figur 16 zeigt drückt einmal die gespannte Spannklammer 144 bzw. deren Schenkel 146, 148 die seitlichen Kanalwände 42 der Kopfleiste 26 in die Ausnehmungen 141 der Federschiene 140, so daß diese formschlüssig im Längskanal 38 gehalten ist. Gleichzeitig sind die Sicherungsmittel (Federklammer 160 und Führungsklammer 164) an der Wischleiste gesichert.

Wenn die Schenkel 146, 148 der Spannklammer 174 gespannt sind, werden auch die Lappen 138 in die Kopfleiste 26 hineingedrückt. Damit das unvermeidbare Montagespiel zwischen Kopfleiste 26 und Innenseite der Haltekrallen 22 eliminiert wird, sind die Lappen 138 aus der Ebene der Schenkel 146, 148 heraus nach außen gebogen. Im Laufe ihrer weiteren Erstreckung weisen sie im Bereich ihrer freien Enden 139 jeweils nach innen gerichtete Anlaufflächen 143 auf, welche als Sicherungsmittel im Längskanal 38 und als Einführhilfe dienen, wenn der Nachfüllsatz 75 in die Haltekrallen 22 des Tragbügelgestells 14 eingeschoben wird.

Als weitere Besonderheit ist das plattenförmige Basisteil 162 des Kombiteils 135 im Bereich der Schenkel 146, 148 der Spannklammer 144 mit zwei Auswölbungen 150 versehen, deren Endkanten 151 dem Haken 170 der Arme 164, 166 zugewandt sind. Der Abstand 152 zwischen diesen Auswölbungs-Endkanten 151 und der Hakenschulterkante 153 ist so auf die Länge 154 der Haltekralle 22 abgestimmt, daß diese nahezu spielfrei zwischen den beiden Kanten 151 und 153 montiert ist (Figur 17).

Ein weiteres Paar von Ausnehmungen 155 in der Federschiene 140 ermöglicht den in Richtung der Pfeile 156 in Figur 18 gegeneinander vorgespannten Hakenarmen 164, 166 ein Eintauchen in die Kontur der Leiste 26, so daß die Arme 164, 166 keine Hemmnisse in bezug auf die Haltekrallen 22 des Tragbügelgestells beim Montieren des Nachfüllsatzes 75 darstellen.

Der Nachfüllsatz 75 wird wie folgt montiert:

Nach dem Einbringen der Federschiene 140 in den Längskanal 38 der Wischleiste 24 wird das Kombiteil 135 in Richtung des Pfeiles 165 auf die Kopfleiste 26 soweit aufgeschoben, bis die Spannklammer 144 mit ihren noch geöffneten Schenkeln 146, 148 (Figur 15) über den Ausnehmungen 141 der Federschiene 140 liegt, deren Ausgestaltung der Federschiene 40 des schon erläuterten Ausführungsbeispiels entspricht. Durch Zusammendrücken der Schenkel 146, 148 der Spannklammer 144 (Figur 14) werden die einander gegenüberliegenden seitlichen Kanalwände in die Ausnehmungen 141 der Federschiene 40 gedrückt und somit die Federschiene im Kanal fixiert. Gleichzeitig ist auch das Kombiteil 135 an der Wischleiste 24 festgelegt, so daß der Nachfüllsatz 75 einsatzbereit ist.

Zum Verbinden des Nachfüllsatzes 75 mit dem Traggestell 14 wird dieser in Richtung des Pfeiles 165 so in die Haltekrallen 22 des Traggestells 14 eingeschoben, daß die Krallen 22 in die Längsnuten 34 der Wischleiste 24 greifen. In diese Längsnuten greifen auch die Schenkel 146, 148 der Spannklammer 144 und die Ansätze 172 der Führungsklammer 168. Wenn der Nachfüllsatz 75 mit den Armen 164, 166 der Federklammer 160 beim Einschieben an einer Haltekralle 22 des Traggestells anschlägt, lenken diese in der schon anhand von Figur 11 beschriebenen Weise aus und die Haltekralle 22 gelangt in eine Rastposition, welche durch die Kanten 151 und 153 des Kombiteils 135 beidseitig begrenzt ist. Damit ist der Nachfüllsatz 75 unverlierbar am Traggestell gehalten und das Wischblatt somit betriebsbereit.

## Patentansprüche

1. Wischblatt (10) zum Reinigen von Scheiben an Kraftfahrzeugen, mit einem langgestreckten Traggestell (14), das mit Haltekrallen (22) eine Kopfleiste (26) einer langgestreckten, aus einem elastischen Material bestehenden Wischleiste (24) umgreift, mit einem in der Kopfleiste (26) vorhandenen, rundum geschlossenen, an den Endflächen (36) der Wischleiste (24) mündenden Längskanal (38), in dem eine Federschiene (40) angeordnet und mit Haltemitteln gegen Längsverschiebung fixiert ist und an der Wischleiste (24) angebrachte Sicherungsmittel mit einem Gestellteil (20, 22) zusammenwirkend diese Wischleiste (24) unverlierbar am Traggestell (14) sichern, wobei die Federschiene (40) formschlüssig in dem Längskanal (38) gehalten ist, dadurch gekennzeichnet, daß die Sicherungsmittel als separate Federklammer (60) ausgebildet und fest mit der Wischleiste (24) verbunden sind.

2. Wischblatt nach Anspruch 1, dadurch gekennzeichnet, daß die Federschiene (40) an wenigstens einer Längsseite eine Ausnehmung (41) hat, in welche die dieser benachbarte Kanalwand (42) hineinragt.

3. Wischblatt nach Anspruch 2, dadurch gekennzeichnet, daß quer zur Längserstreckung der Wischleiste (24) wirkende Spannmittel (44) die Kanalwand (42) in die Ausnehmung (41) drücken.

4. Wischblatt nach Anspruch 3, dadurch gekennzeichnet, daß die Spannmittel durch eine Klammer (44) gebildet sind, welche die Kopfleiste (26) der Wischleiste (24) zumindest abschnittsweise umgreift und deren zueinander im wesentlichen parallel verlaufende Schenkel (46, 48) die einander gegenüberliegenden seitlichen Kanalwände (42) in die Ausnehmung (41) drücken.

5. Wischblatt nach Anspruch 4, dadurch gekennzeichnet, daß zwischen einem die Klammerschenkel (46 und 48) verbindenden Quersteg (49) der Klammer (44) und der diesem zugewandten oberen Fläche (78) der Kopfleiste (26) die Federklammer (60) angeordnet und festgehalten ist und mit zumindest einem elastisch auslenkbaren Arm (64 bzw. 66) eine Haltekralle (22) des Traggestells quert und diese mit einem an dem Arm (64, 66) vorhandenen Haken (70) hintergreift.

6. Wischblatt nach Anspruch 5, dadurch gekennzeichnet, daß die Federklammer (60) ein plattenförmiges Basisteil (62) aufweist, das auf der oberen Fläche (78) der Kopfleiste (26) aufliegt und daß an dem Basisteil (62) die beiden Seitenflächen (32) der Kopfleiste (26) übergreifende Ansätze (72) angeordnet sind, die mit gegeneinander gerichteten Enden (74) in randoffene Längsnuten (34) der Kopfleiste (26) greifen.

7. Wischblatt nach Anspruch 6, dadurch gekennzeichnet, daß das plattenförmige Basisteil (62) einander gegenüberliegende Aussparungen (76) aufweist, in welchen die Schenkel (46, 48) der Spannklammer (44) die Federklammer (60) queren.

8. Wischblatt nach einem der Ansprüche 5 bis 7, dadurch gekennzeichnet, daß der elastisch auslenkbare Arm (64, 66) der Federklammer (60) durch eine der einen Seitenfläche (32) der Kopfleiste (26) benachbarte, sich in Längsrichtung der Wischleiste (24) erstreckende Wange (68) gebildet ist, an deren freien Ende der mit der Haltekralle (22) des Traggestells (14) zusammenwirkende Haken (70) angeordnet ist.

9. Wischblatt nach Anspruch 8, dadurch gekennzeichnet, daß die Wange (68) sich in einer Ebene befindet, in welcher der eine Ansatz (72) des plattenförmigen Basisteils (62) liegt.

10. Wischblatt nach einem der Ansprüche 5 bis 9, dadurch gekennzeichnet, daß die Federklammer (60) mit ihren Ansätzen (72) und dem den Haken (70) aufweisenden Arm (64, 66) einstückig ausgebildet und aus Federbandstahl hergestellt ist.

11. Wischblatt nach einem der Ansprüche 5 bis 9, dadurch gekennzeichnet, daß die Federklammer (60) zwei sich parallel zueinander erstreckende, den beiden Seitenflächen (32) der Kopfleiste (26) benachbarte Wangen (68) hat, welche zwei Hakenarme bilden.

12. Wischblatt nach Anspruch 4, dadurch gekennzeichnet, daß die Klammer (44) aus einem verformbaren Metall hergestellt ist.

13. Wischblatt nach Anspruch 4, dadurch gekennzeichnet, daß mit der Spannklammer (144) eine Federklammer (160) zu einem Kombiteil (135) einstückig verbunden ist und daß die Federklammer (160) mit zumindest einem elastisch auslenkbaren Arm (164 bzw. 166) eine Haltekralle (22) des Traggestells (14) quert und diese mit einem am Arm (164 bzw. 166) vorhandenen Haken (170) hintergreift.

14. Wischblatt nach Anspruch 13, dadurch gekennzeichnet, daß das Kombiteil (135) ein plattenförmiges Basisteil (162) hat, an dem die Arme (164, 166) der Federklammer (160) angeordnet sind, daß in Montagerichtung (Pfeil 165) des Kombiteils (135) gesehen dieses vor den Armen (164 bzw. 166) eine Führungsklammer (168) aufweist und daß zwischen der Führungsklammer (168) und den Armen (164 bzw. 166) an dem Kombiteil (135) eine Spannklammer (144) angeordnet ist, welche die Kopfleiste (26) der Wischleiste (24) zumindest abschnittsweise umgreift und deren zueinander im wesentlichen parallel verlaufende Schenkel (146, 148) die einander gegenüberliegenden seitlichen Kanalwände in die Ausnehmungen (141) der Federschiene (140) drücken.

15. Wischblatt nach Anspruch 14, dadurch gekennzeichnet, daß an den die Kopfleiste (26) der Wischleiste (24) seitlich umfassenden Schenkeln (146, 148) der Spannklammer (144) je ein sich in Montagerichtung (Pfeil 165) erstreckender Lappen (138) angeordnet ist, die bei montiertem Nachfüllsatz (75) von den Haltekrallen (22) des Traggestells übergriffen sind.

16. Wischblatt nach Anspruch 15, dadurch gekennzeichnet, daß die Lappen (138) aus der Ebene der Schenkel (146, 148) heraus nach außen gekrümmt sind und an ihren freien Enden (139) je eine nach innen gerichtete Anlauffläche (143) aufweisen.

17. Wischblatt nach Anspruch 14, dadurch gekennzeichnet, daß das plattenförmige Basisteil (162) des Kombiteils (135) im Bereich der Schenkel (146, 148) der Spannklammer (144) zumindest eine Auswölbung (150) hat, deren Endkante (151) dem Haken (170) zugewandt ist und daß der Abstand (152) zwischen der Endkante (151) und der Hakenschulterkante (153) auf die Länge (154) der Haltekralle (22) des Traggestells (14) abgestimmt ist.

## Claims

1. Wiper blade (10) for cleaning motor-vehicle windows, having an elongated supporting frame (14) which engages with retaining claws (22) around a head strip (26) of an elongated wiper strip (24) consisting of an elastic material, having a longitudinal channel (38) which is in the headstrip (26), is closed all round, opens at the end surfaces (36) of the wiper strip (24) and in which a spring rail (40) is arranged and fixed against longitudinal displacement with retaining means, and securing means which are attached to the wiper strip (24), interacting with a frame part (20, 22), secure this wiper strip (24) captively on the supporting frame (14), the spring rail (40) being retained in a positive-locking manner in the longitudinal channel (38), characterized in that the securing means are designed as separate spring clips (60) and are connected fixedly to the wiper strip (24).

2. Wiper blade according to Claim 1, characterized in that the spring rail (40) has, on at least one longitudinal side, a recess (41) into which the channel wall (42) adjacent thereto protrudes.

3. Wiper blade according to Claim 2, characterized in that clamping means (44) which act transversely to the longitudinal extent of the wiper strip (24) press the channel wall (42) into the recess (41).

4. Wiper blade according to Claim 3, characterized in that the clamping means are formed by a clip (44) which engages around at least some areas of the headstrip (26) of the wiper strip (24) and whose legs (46, 48) which run essentially parallel to each other press the mutually opposite, lateral channel walls (42) into the recess (41).

5. Wiper blade according to Claim 4, characterized in that the spring clip (60) is arranged and secured between a cross web (49), connecting the clip legs (46 and 48) of the clip (44), and that upper surface (78) of the headstrip (26) which faces this cross web, and by means of at least one elastically deflectable arm (64 or 66) traverses a retaining claw (22) of the supporting frame and grips the said claw from behind with a hook (70) present on the arm (64, 66).

6. Wiper blade according to Claim 5, characterized in that the spring clip (60) has a plate-shaped base part (62) which rests on the upper surface (78) of the headstrip (26), and in that projections (72) are arranged on the base part (62), which projections engage over the two side surfaces (32) of the headstrip (26) and grip, by means of ends (74) directed towards each other, into open-edged longitudinal grooves (34) of the headstrip (26).

7. Wiper blade according to Claim 6, characterized in that the plate-shaped base part (62) has mutually opposite cutouts (76) in which the legs (46, 48) of the clamping clip (44) cross the spring clip (60).

8. Wiper blade according to one of Claims 5 to 7, characterized in that the elastically deflectable arm (64, 66) of the spring clip (60) is formed by a side piece (68) which is adjacent to the one side surface (32) of the headstrip (26), extends in the longitudinal direction of the wiper strip (24) and at whose free end the hook (70), which interacts with the retaining claw (22) of the supporting frame (14), is arranged.

9. Wiper blade according to Claim 8, characterized in that the side piece (68) is located in a plane in which the one projection (72) of the plate-shaped base part (62) lies.

10. Wiper blade according to one of Claims 5 to 9, characterized in that the spring clip (60) together with its projections (72) and the arm (64, 66) having the hook (70) is of one-piece design and is produced from spring band steel.

11. Wiper blade according to one of Claims 5 to 9, characterized in that the spring clip (60) has two side pieces (68) which extend parallel to each other, are adjacent to the two side surfaces (32) of the headstrip (26) and have two hook arms.

12. Wiper blade according to Claim 4, characterized in that the clip (44) is produced from a deformable metal.

13. Wiper blade according to Claim 4, characterized in that a spring clip (160) is connected integrally to the clamping clip (144) to form a combined part (135), and in that the spring clip (160) crosses, by means of at least one elastically deflectable arm (164 or 166), a retaining claw (22) of the supporting frame (14) and grips the said claw from behind with a hook (170) which is present on the arm (164 or 166).

14. Wiper blade according to Claim 13, characterized in that the combined part (135) has a plate-shaped base part (162) on which the arms (164, 166) of the spring clip (160) are arranged, in that as seen in the installation direction (arrow 165) of the combined part (135), the said combined part has a guide clip (168) upstream of the arms (164 and 166), and in that between the guide clip (168) and the arms (164 and 166) there is arranged on the combined part (135) a clamping clip (144) which grips around at least some areas of the headstrip (26) of the wiper strip (24) and whose legs (146, 148) which run essentially parallel to each other press the mutually opposite, lateral channel walls into the recesses (141) of the spring rail (140).

15. Wiper blade according to Claim 14, characterized in that on the legs (146, 148) of the clamping clip (144), which legs surround the headstrip (26) of the wiper strip (24) laterally, there is arranged a respective tab (138) extending in the installation direction (arrow 165), the said tabs being engaged over by the retaining claws (22) of the supporting frame when a refill set (75) is fitted.

16. Wiper blade according to Claim 15, characterized in that the tabs (138) are bent outwards out of the plane of the legs (146, 148) and have an inwardly directed run-on surface (143) at their free ends (139).

17. Wiper blade according to Claim 14, characterized in that the plate-shaped base part (162) of the combined part (135) has, in the region of the legs (146, 148) of the clamping clip (144), at least one bulge (150) whose end edge (151) faces the hook (170), and in that the distance (152) between the end edge (151) and the hook shoulder edge (153) is matched to the length (154) of the retaining claw (22) of the supporting frame (14).

## Revendications

1. Balai d'essuie-glace (10) pour essuyer des vitres de véhicules automobiles comprenant une ossature de support (14) allongée, entourant avec des griffes (22) une barrette de tête (26) d'une raclette (24) en matière élastique, allongée, cette raclette ayant un canal longitudinal (38) dans sa barrette (26), ce canal à périphérie fermée débouchant au niveau des surfaces d'extrémité (36) de la raclette (24), pour recevoir un raidisseur (40) bloqué en coulissement longitudinal par des moyens de fixation, et des moyens de blocage prévus sur la raclette (24), coopérant avec une partie (palonnier) d'ossature (20, 22), en bloquant la raclette (24) de manière imperdable à l'ossature (14),
le raidisseur (40) étant tenu dans le canal longitudinal (38) par une liaison de forme,
caractérisé en ce que
les moyens de blocage sont constitués par une pince élastique (60) distincte, reliée solidairement à la raclette (24).

2. Balai d'essuie-glace selon la revendication 1,
caractérisé en ce que
le raidisseur (40) comporte au niveau d'au moins un grand côté, une découpe (41) dans laquelle pénètre la paroi adjacente (42) du canal.

3. Balai d'essuie-glace selon la revendication 2,
caractérisé en ce que
des moyens de serrage (44) agissant transversalement à la direction longitudinale de la raclette (24) poussent la paroi (42) du canal dans la découpe (41).

4. Balai d'essuie-glace selon la revendication 3,
caractérisé en ce que
les moyens de serrage sont formés par une pince (44) qui entoure au moins partiellement la barrette de tête (26) de la raclette (24) et dont les branches (46, 48) essentiellement parallèles, poussent les parois latérales opposées (42) du canal dans la découpe (41).

5. Balai d'essuie-glace selon la revendication 4,
caractérisé en ce que
la pince élastique (60) est prévue entre une âme transversale (49) de la pince (44) reliant les branches (46, 48) de la pince et la surface supérieure (68) de la barrette (26) tournée vers la pince, et la pince est ainsi bloquée et coupe par au moins un bras à débattement élastique (64, 66), une griffe (22) de l'ossature et vient prendre derrière celle-ci avec un crochet (70) du bras (64, 66).

6. Balai d'essuie-glace selon la revendication 5,
caractérisé en ce que
la pince élastique (60) comporte une pièce de base (62) en forme de plaque qui s'appuie sur la surface supérieure (78) de la barrette (26) et la pièce de base (62) comporte les deux prolongements (72) venant par-dessus les deux surfaces latérales (32) de la barrette (26), prolongements dont les extrémités (74) tournées l'une vers l'autre viennent prendre dans les rainures longitudinales à bord ouvert (34) de la barrette (26) .

7. Balai d'essuie-glace selon la revendication 6,
caractérisé en ce que
la pièce de base (62) en forme de plaque comporte des découpes (76) opposées, dans lesquelles les branches (46, 48) de la pince de serrage (44) coupent la pince élastique (60).

8. Balai d'essuie-glace selon l'une des revendications 5 à 7,
caractérisé en ce que
le bras (64, 66) à débattement élastique de la pince élastique (60) est formé par une joue (68) voisine de l'une des surfaces latérales (32) de la barrette (26) et s'étendant dans la direction longitudinale de la raclette (24), l'extrémité libre de cette joue comportant des crochets (70) coopérant avec les griffes (22) de l'ossature (14).

9. Balai d'essuie-glace selon la revendication 8,
caractérisé en ce que
la joue (68) se trouve dans un plan dans lequel il y a un prolongement (72) de la pièce de base (62) en forme de plaque.

10. Balai d'essuie-glace selon l'une des revendications 5 à 9,
caractérisé en ce que
la pince élastique (60) est réalisée en une seule pièce avec ses prolongements (72) et le bras (64, 66) muni du crochet (70), cette pince étant réalisée dans un ruban d'acier à ressort.

11. Balai d'essuie-glace selon l'une des revendications 5 à 9,
caractérisé en ce que
la pince élastique (60) possède deux joues (68), s'étendant parallèlement, et voisines des deux surfaces latérales (32) de la barrette (26), ces joues formant deux bras de crochet.

12. Balai d'essuie-glace selon la revendication 4,
caractérisé en ce que
la pince (44) est en métal déformable.

13. Balai d'essuie-glace selon la revendication 4,
caractérisé en ce qu'
une pince élastique (160) est réalisée avec la pince de serrage (144) pour former une pièce combinée (135) et la pince élastique (160) vient prendre avec au moins un bras à débattement élastique (164, 166) derrière une griffe (22) de l'ossature (14) en coupant celle-ci et en venant derrière celle-ci avec un crochet (170) prévu sur l'un des bras (164, 166).

14. Balai d'essuie-glace selon la revendication 13,
caractérisé en ce que
la pièce combinée (135) comporte une partie de base (162) en forme de plaque munie des bras (164, 166) de la pince élastique (160),
et lorsqu'on regarde dans la direction de montage (flèche 165) la pièce combinée (135), celle-ci comporte une pince de guidage (168) en amont des bras (164, 166) et, entre la pince de guidage (168) et les bras (164, 166), la pièce combinée (135) comporte une pince de serrage (144) qui entoure au moins par segments la barrette (26) de la raclette (24), et ses branches (146, 148) essentiellement parallèles, poussent les parois latérales opposées du canal dans les découpes (141) du raidisseur (140).

15. Balai d'essuie-glace selon la revendication 14,
caractérisé en ce que
les branches (146, 148) de la pince de serrage (144) qui entourent latéralement la barrette de tête (26) de la raclette (24), ont des pattes (138) s'étendant dans la direction de montage (flèche 165) et qui sont chevauchées par les griffes (22) de l'ossature lorsque la garniture de remplacement (75) est installée.

16. Balai d'essuie-glace selon la revendication 15,
caractérisé en ce que
les pattes (138) sont recourbées vers l'extérieur par rapport au plan des branches (146, 148) et possèdent à leurs extrémités libres (139) chaque fois une surface d'attaque (143) dirigée vers l'intérieur.

17. Balai d'essuie-glace selon la revendication 14,
caractérisé en ce que
la pièce de base (162) en forme de plaque de la pièce combinée (135) comporte au niveau des branches (146, 148) de la pince (144), au moins une partie bombée (150) dont le bord (151) est tourné vers le crochet (170) et la distance (152) entre le bord (151) et l'arête de l'épaulement du crochet (153) est définie suivant la longueur (154) des griffes (22) de l'ossature (14).
